Europäisches Patentamt

European Patent Office

Office européen des brevets

(19)

(11) Veröffentlichungsnummer: **0 212 705**
**B1**

(12) **EUROPÄISCHE PATENTSCHRIFT**

(45) Veröffentlichungstag der Patentschrift: 02.05.90

(51) Int. Cl.⁵: **G 11 B 9/10**

(21) Anmeldenummer: **86201234.1**

(22) Anmeldetag: **15.07.86**

(54) **Elektronenstrahl-Aufzeichnungsträger.**

(30) Priorität: **20.07.85 DE 3525994**

(43) Veröffentlichungstag der Anmeldung:
**04.03.87 Patentblatt 87/10**

(45) Bekanntmachung des Hinweises auf die
Patenterteilung:
**02.05.90 Patentblatt 90/18**

(84) Benannte Vertragsstaaten:
**DE FR GB IT NL**

(56) Entgegenhaltungen:
**DE-A-1 963 374**
**DE-A-3 032 611**
**DE-B-2 421 022**
**US-A-4 226 928**

(73) Patentinhaber: **Philips Patentverwaltung GmbH**
**Wendenstrasse 35 Postfach 10 51 49**
**D-2000 Hamburg 1 (DE)**
(84) **DE**

(73) Patentinhaber: **N.V. Philips'**
**Gloeilampenfabrieken**
**Groenewoudseweg 1**
**NL-5621 BA Eindhoven (NL)**
(84) **FR GB IT NL**

(72) Erfinder: **Comberg, Albert, Dr.**
**Drei Rosen Strasse 20**
**D-5100 Aachen (DE)**
Erfinder: **Welker, Thomas, Dr.**
**Offermann Strasse 29a**
**D-5106 Roetgen (DE)**

(74) Vertreter: **Piegler, Harald, Dipl.-Chem. et al**
**Philips Patentverwaltung GmbH Wendenstrasse**
**35 Postfach 10 51 49**
**D-2000 Hamburg 1 (DE)**

Courier Press, Leamington Spa, England.

## Beschreibung

Ein Elektronenstrahl-Aufzeichnungsträger mit einer auf eine Unterlage aufgebrachten, für Elektronenstrahlung empfindlichen Schicht, die zumindest teilweise aus einem Leuchtstoff besteht, ist aus DE—A—1 963 374 bekannt. Als Leuchtstoffe werden darin mit Thallium dotiertes Kaliumjodid und mit Mangan dotiertes Kaliummagnesium-fluorid genannt. Beim Einschreiben von Informationen mit einem Elektronenstrahl lumineszieren die Leuchtstoffe; gleichzeitig werden Fehl- oder Defektstellen erzeugt, welche die Lumineszenz löschen. Diese Fehlstellen können durch Erhitzen beseitigt oder geheilt werden. Es handelt sich demnach um einen Aufzeichnungsträger zum reversiblen Aufzeichnen von Informationen.

Die für Elektronenstrahlung empfindliche Schicht wird im folgenden der Einfachheit halber auch als "Leuchtstoffschicht" bezeichnet.

Bei dem bekannten Aufzeichnungsträger beruht die Speicherung von Informationen auf der Bildung von Bereichen unterschiedlicher Grade von Strahlungsdefekten auf der Oberfläche des elektronenlumineszenten Leuchtstoffs, d.h. die Dicke der Leuchtstoffschicht soll so gewählt werden, daß sie beinahe, aber nicht ganz von dem Elektronenstrahl durchdrungen wird, welcher die Schicht bombardiert. Die Speicherung auf der Oberfläche hat den Nachteil, daß die gespeicherte Information gegen Berührung, Witterung und sonstige oberflächenschädigende Einflüsse empfindlich ist.

Die Verwendung von Leuchtstoffen auf der Basis von Halogenidkristallen in Elektronenstrahl-Aufzeichnungsträgern hat den weiteren Nachteil, daß diese Kristalle hygroskopisch sind. Dadurch wird die im Prinzip einfache Herstellung von Aufzeichnungsträgern auf Leuchtstoffbasis erschwert, und es muß dafür Sorge getragen werden, daß die Leuchtstoffe beim späteren Gebrauch des Aufzeichnungsträgers vor Luftfeuchtigkeit geschützt sind.

Hinzu kommt, daß lokale Defektkonzentrationsunterschiede in Kristallen der zuvor erwähnten Art eine Tendenz zum Ausgleich haben. Dieser Effekt beruht vermutlich auf Diffusion. Die Diffusionsgeschwindigkeit der Defekte hängt sowohl vom Konzentrationsgradienten derselben in den Kristallen als auch von der Temperatur ab. Sie nimmt mit beiden zu. Das hat zur Folge, daß eine permanente Neigung zum Informationsverlust besteht. In der obengenannten Offenlegungsschrift ist denn auch dieser Effekt, der bei höheren Temperaturen besonders stark in Erscheinung tritt, als Löschmechanismus für die eingeschreibene Information vorgesehen.

Die intrinsische Neigung des in dem bekannten Aufzeichnungsträger enthaltenen Leuchtstoffstyps, durch Auseinander-Diffundieren lokalisierter Fehlstellenanhäufungen das chemische Gleichgewicht wiederherzustellen, begrenzt auf natürliche Weise die höchste Zahl der pro Flächeneinheit einschreibbaren 0 > 1-Informationen. Gemäß der obengenannten Offenlegungsschrift werden denn auch nur $10^7$ Bits digitale Information auf einer Platte von $4 \times 6$ mm$^2$ abgespeichert.

Aus der DE—A1—3 032 611 sind organische Seltenerdsalzleuchtstoffe bekannt, die Strahlung zu emittieren vermögen, wenn sie einer Erregung u.a. durch Elektronenbeschuß unterworfen werden, und die sich u.a. als photographische Materialien, bildauflösende Materialien bzw. Materialien mit hoher Auflösung, und als Grundmaterialien für das Gebiet der Optoelektronik eignen.

Der Erfindung liegt die Aufgabe zugrunde, einen Aufzeichnungsträger zum irreversiblen Einschreiben von Informationen und damit zur dokumentengerechten Aufzeichnung zu schaffen.

Eine weitere Aufgabe der Erfindung ist es, einen Aufzeichnungsträger zu schaffen, bei dem der Aufzeichnungsvorgang nicht nur die Oberfläche, sondern das ganze Volumen der für Elektronen strahlen empfindlichen Schicht erfaßt.

Eine weitere Aufgabe der Erfindung ist es, für einen Elektronenstrahl-Aufzeichnungsträger Leuchtstoffe auszuwählen, die nicht hygroskopisch sind und die keine Tendenz zum Ausgleich von lokalen Defektkonzentrationsunterschieden haben.

Ferner ist es Aufgabe der Erfindung, einen Aufzeichnungsträger mit erhöhter Informationsdichte zu schaffen.

Diese Aufgaben werden erfindungsgemäß gelöst durch die Verwendung einer auf eine Unterlage aufgebrachten, für Elektronenstrahlung empfindlichen Schicht, die einen organischen Seltenerdmetall-Leuchtstoff aufweist oder aus einem solchen Leuchtstoff besteht, zum Einschreiben von Informationen mit Elektronenstrahlen, deren Intensität während der Bestrahlung der Schicht derart bemessen wird, daß der Leuchtstoff während der Bestrahlungsdauer in seinen Lumineszenzeigenschaften örtlich irreversibel zerstört wird.

Bei der Untersuchungen, die zur Erfindung geführt haben, hat sich nämlich gezeigt, daß Leuchtstoffe dieser Art, die zum Teil in DE—A1—3 032 611 beschrieben sind, schon mit Elektronenstrahlen niedriger Intensität irreversibel zerstört werden.

Um sicherzustellen, daß der organische Seltenerdmetall-Leuchtstoff durch die Elektronenstrahlung vollständig zerstört wird, ist die Dicke der für Elektronenstrahlung empfindlichen Schicht kleiner oder gleich der Elektroneneindringtiefe.

Als organische Seltenerdmetall-Leuchtstoffe werden bevorzugt:

Die aus der DE—A1—3 032 611 bekannten Seltenerdmetallsalze von Carbonsäuren, wie aliphatische Carbonsäuren, z.B. 2,4,6-Octatriensäure und 2,4,6,8-Decatetraensäure und ihre Substitutions-produkte, aromatische Carbonsäuren, z.B. m-Methoxybenzoesäure, p-Methoxybenzoesäure, m-Chlorbenzoesäure, p-Chlorbenzoesäure, p-Brombenzoesäure, Dichlorbenzoesäure, p-Äthoxybenzoesäure, m-Nitrobenzoesäure, Cuminsäure (p-Isopropylbenzoesäure), p-t-Butylbenzoesäure, 4-Benzoylbenzoesäure, 4-Biphenylcarbonsäure, Phenylpropiolsäure, 2-Chlor-6-fluorbenzoesäure, α-Brom-p-toluylsäure, Isophthalsäure, Terephthalsäure, Trimellitsäure und ihre Substitutionsprodukte, polycyclische aromatische Carbonsäuren, z.B. Anthrazen-9-carbonsäure und Anthrachinoncarbonsäure und ihre Substitutionsprodukte, heterocyclische Carbonsäuren, z.B. 2-Thiophencarbonsäure, 3-Thiophencarbonsäure, Nicotinsäure, Picolinsäure, Indol-5-carbonsäure, Pyridin-2,5-dicarbonsäure, Pyridin-3,4-dicarbonsäure, 2-Phenyl-4-chinolincarbonsäure, Chinaldinsäure und 5-Methyl-2-thiophencarbonsäure und Substitutionsprodukte dieser Säuren, und α,β-ungesättigte Carbonsäuren, z.B. 3-Indolacrylsäure, 4-Imidazolacrylsäure, 3-(2-Thienyl)acrylsäure, β-(3-Pyridyl)acrylsäure, 2,3-Bis(p-Methoxyphenyl)acrylsäure, Zimtsäure, p-Methylzimtsäure, α-Methylzimtsäure, m-Chlorzimtsäure, m-Bromzimtsäure, p-Chorzimtsäure, 3,5-Dimethoxyzimtsäure und 3,4-Dihydroxyzimtsäure, und Carbonsäuren wie Crocetin, Bixin und Azafrin und ihre Substitutionsprodukte.

Leuchtstoffe mit den Seltenerdmetallen Europium, Terbium, Cer und Thulium. Die Seltenerdmetalle sind vorzugsweise dreiwertig.

Besonders bevorzugt wird Europiumcinnamat.

Andere Leuchtstoffe, die gemäß der Erfindung verwendbar sind, sind Phthalocyanine und Porphyrine, wobei das zentrale Metallion ein dreiwertiges Seltenerdmetallion, vorzugsweise Europium oder Terbium, ist.

Seltenerdmetallchelate, die beispielsweise β-Diketone oder Carboxylgruppen als Ligand enthalten, sind in der DE—A1—3 032 611 als instabile Leuchststoffe beschreiben. Infolgedessen sind auch gerade diese Leuchtstoffe im Rahmen der Erfindung geeinget.

Auch Europium-β-(3-pyridyl)-acrylat, Europiumsorbat und Europiumdiphenylacetat kommen als Leuchtstoffe für den erfindungsgemäßen Aufzeichnungsträger in Frage, obwohl sie eine geringere Lichtausbeute als z.B. Europiumcinnamat haben. In diesem Falle ist es zweckmäßig, beim Auslesen der gespeicherten Information Lichtdetektoren mit erhöhter Empfindlichkeit anzuwenden.

Der erfinduingsgemäße Elektronenstrahl-Aufzeichnungsträger wird hergestellt, indem eine Unterlage mit einer dünnen Schicht aus einem organischen Seltenerdmetall-Leuchtstoff überzogen wird. Als Unterlagen sind z.B. Metallplatten, Glasplatten, Quarzglasplatten, Saphirplatten, transparente Kunststoffolien oder -platten geeignet.

Die Unterlagen sind in manchen Fällen, in denen die selbst einen zu hohen Isolationswiderstand haben, um den Abtransport der aufgebrachten Ladungen zu bewerkstelligen, an der der späteren Leuchtstoffschicht zugewandten Seite mit einer transparenten, elektrisch leitfähigen Beschichtung oder mit einem Aluminiumfilm versehen. Diese Beschichtung wirkt als Ableitelektrode. Wählt man hingegen Unterlagen mit ausreichender elektrischer Leitfähigkeit, wie z.B. durch Dotierung leitfähig gemachte Gläser oder Metalle, dann erübrigt sich die Ableitelektrode.

Die Leuchtstoffschicht wird z.B. durch Sedimentation aus einer Suspension von Leuchtstoff und organischem Lösungsmittel, z.B. Äthanol oder Toluol, hergestellt. Die so hergestellten Schichten sind zweckmäßigerweise 1 bis 5 μm dick.

Zur Abspeicherung von Informationen wird die Leuchtstoffschicht hinsichtlich ihrer ursprünglichen Lumineszenzeigenschaften örtlich irreversibel zerstört und an anderen Stellen in ihrem Ausgangszustand belassen. Auf diese Weise erhält man in der Leuchtstoffschicht die binäre Kodierung lumineszierend/nicht lumineszierend als Funktion des Ortes. In gewissen Grenzen kommt auch eine analoge Kodierung der Leuchtstoffschicht in Frage. Zue diesem Zweck erfolgt die lokale Zerstörung der Lumineszenzeigenschaften der Leuchtstoffschicht in Abstufungen. Man erhält so z.B. Kodierungen der Form lumineszierend/weniger lumineszierend/nicht lumineszierend.

Wie bereits erwähnt, beruht die Speicherung von Informationen bei dem aus der DE—A—1 963 374 bekannten Aufzeichnungsträger auf der Bildung von Bereichen unterschiedlicher Grade von Strahlungsdefekten auf der Oberfläche des Leuchtstoffes. Im Gegensatz dazu ist die Oberfläche beim erfindungsgemäßen Aufzeichnungsträger von sekundärer Bedeutung insofern, als dabei der Aufzeichnungsvorgang das ganze Volumen der Leuchtstoffschicht erfaßt. Die Oberfläche wird zwar auch beschrieben, aber sie ist nicht der primäre Träger der Information. Der sich daraus ergebene Vorteil ist eine größere Unempfindlichkeit gegen Berührung, Witterung und sonstige oberflächenschädigende Einflüsse. Eine spätere Vergütung der Oberfläche kann erfolgen.

Außerdem erfolgt bei dem erfindungsgemäßen Aufzeichnungsträger die Strahlenschädigung lokalisiert bis auf Moleküldimension. Demnach handelt es sich nicht um Kristalldefekte größerer Ausdehnung. Der Defekt ist also molekülgebunden. Dieses trifft für alle gemäß der Erfindung verwendbaren organischen Seltenerdmetall-Leuchtstoffe zu. Daraus ergibt sich, daß die oben angegebenen Einschränkungen, die für Alkalihalogenide und sich in diesem Sinne ähnlich verhaltende anorganische Materialien gelten, in den erfindungsgemäß verwendeten Materialien nicht auftreten.

Das örtliche Auflösungsvermögen und damit die Informationsdichte ist beim Aufzeichnungsträger nach der Erfindung durch die Eindringtiefe des die Information einschreibenden Elektronenstrahls, die von der Elektronenenergie abhängt, und den Durchmesser des Elektronenstrahls vorgegeben. So erlauben z.B. handelsübliche Rasterelektronenmikroskope die Fokussierung des Elektronenstrahls bis auf 5 nm. Selbst wenn der Elektronenstrahl auf den doppelten Durchmesser defokussiert wäre (10 nm), ließen sich somit auf einer Speicherfläche von 4 × 6 mm² 24 × 10¹⁰ Bit abspeichern.

Die Begrenzung durch die Eindringtiefe kann, wie bereits erwähnt, durch entsprechende Vorgabe der Schichtdicke umgangen werden, die z.B. bei einer Elektronenenergie von 30 keV etwa 4 µm beträgt.

Zum späteren Auslesen der auf diese Weise abgespeicherten Information wird die Leuchtstoffschicht zur Lumineszenz angeregt und das dabei ausgesendete Licht als Funktion des Ortes in der Leuchtstoffschicht registriert.

Die Erfindung wird im folgenden an Hand einer Zeichnung und einiger Ausführungsbeispiele erläutert.

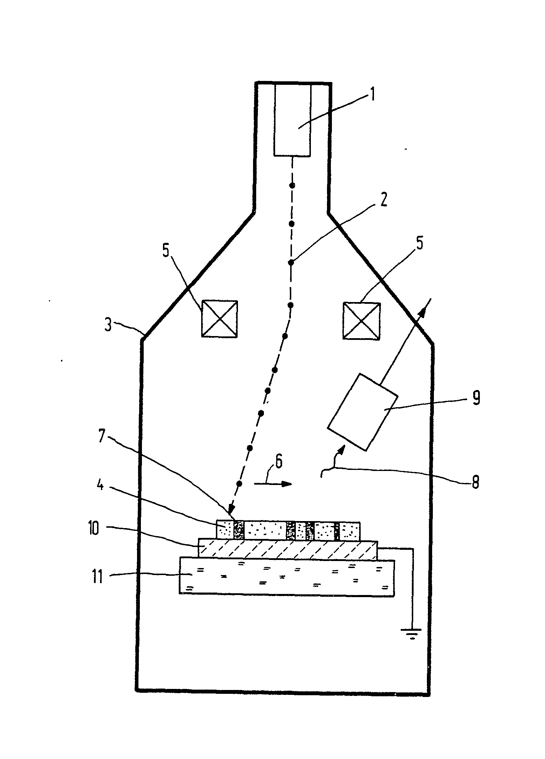

Die einzige Figur der Zeichnung zeigt eine Schreib-Lese-Vorrichtung mit einem darin angeordneten Aufzeichnungsträger in schematischer Darstellung.

Die Funktion und der Aufbau der Vorrichtung und des Aufzeichnungsträgers werden im folgenden beschrieben: Ein Elektronenstrahlerzeugungssystem 1 dient zur Erzeugung und Formgebung eines schreibenden bzw. lesenden Elektronenstrahls 2. Solche Strahlerzeugungssysteme sind allgemein bekannt und finden vielfältige Anwendung in Elektronenmikroskopen, Kathodenstrahlröhren u.ä. Die Vorrichtung selbst besteht aus einem evakuierten Rezipienten 3. Zum Abrastern der Leuchtstoffschicht 4 wird der Elektronenstrahl 2 entweder elektrostatisch oder, wie in der Figur gezeigt, magnetisch mit Deflektionsspulen 5 über die Leuchtstoffschicht zeilenweise rasterförmig abgelenkt. Dies ist durch einen Pfeil 6 angedeutet. Die Fokusebene für den Elektronenstrahl stellt die Leuchtstoffschicht 4 dar. Beim Einschreiben der Information (mit hoher Elektronenstrahlintensität) wird der Elektronenstrahl durch ein Steuergitter, das sich im vorliegenden Fall in Form eines Wehneltzylinders direkt in dem Elektronenstrahlerzeugungssystem 1 befindet, an den Stellen ausgetastet, wo eine Zerstörung der Leuchtstoffschicht 4 nicht vorgesehen ist. Die schematisch dargestellten Bereiche, in denen eine Zerstörung durch den Elektronenstrahl erfolgt ist, sind mit 7 bezeichnet.

Die Leuchtstoffschicht 4 ist vollständig mit Information codiert, wenn ein Raster durchlaufen worden ist. Anschließend kann das Auslesen der gespeicherten Information auf ganz analoge Weise, jedoch mit geringerer Elektronenstrahlintensität, durch zeilenweises Abrastern der Leuchtstoffschicht 4 erfolgen. Das dabei entstehende Lumineszenzisignal 8 wird synchron zur Deflektion des Elektronenstrahls mit Hilfe eines Photoedetektors 9 (Photomultiplier) registriert. Damit sich die Leuchtstoffschicht 4 während des Einschreibe- bzw. Auslesevorgangs nicht infolge der aufgebrachten Elektronen auflädt, ist eine leitfähige Unterelektrode 10 zwischen Leuchtstoffschicht 4 und Unterlage 11 vorgesehen, die zur Ableitung der Ladungen dient. Wie bereits erwähnt, ist es auch möglich, auf eine solche Ableitelektrode zu verzichten, wenn die Unterlage 11 selbst leitfähig ist und mit dieser Eigenschaft die Funktion der Ableitelektrode übernommen hat. Insgesamt ist eine solche Anordnung in idealer Weise in einem Rasterelektronenmikroskop verwirklicht.

Beispiel 1

60 mg Europiumcinnamat-Leuchtstoff mit einem mittleren Teilchendurchmesser in der Größenordnung von 50 µm werden in 100 cm³ Toluol dispergiert. Anschließend erfolgt aus der so hergestellten Suspension die Abscheidung einer Schicht durch Sedimentation auf einem Glassubstrat (5 × 5 cm²), das auf seiner Sedimentionsoberfläche mit einer transparenten, elektrisch leitfähigen Beschichtung versehen ist. Derart beschichtete Gläser sind unter der Bezeichnung "Anellglas" handelsüblich. Die transparente Schicht dient als Unterelektrode und verhindert im geerdeten Zustand die Aufladung der Leuchtstoffschicht bei Kathodenstrahlanregung. Nach dem Sedimentieren der Schicht wird das überstehende Lösungsmittel vorsichtig durch Absaugen entfernt, so daß die Schicht nicht beschädigt wird. Durch anschließendes Trocknen bei 50°C bis 70°C wird die endgültige Trockenhaftung der Schicht erreicht. Die Leuchtstoffschicht ist damit fertiggestellt, sie hat ein Schichtgewicht von 4 mg/cm² und wird zum Einspeichern der Information in die Probenkammer eines Rasterelektronenmikroskops (Philips PSEM500) eingeführt.

Das Einschreiben der Information geschieht auf folgende Art und Weise:

Mit Hilfe des Elektronenstrahls des Rasterelektronenmikroskops wird eine Fläche von 1 × 2 mm² der Leuchtstoffschicht zeilenförmig abgerastert. Druch Modulation der Elektronenstrahlintensität (ein — aus) wird sukzessiv, seriell die Leuchtstoffschicht bestrahlt. Dabei wird die Elektronenstrahlintensität während der Bestrahlung der Leuchtstoffschicht so bemessen, daß der Leuchtstoff während der Bestrahlungsdauer in seinen Lumineszenzeigenschaften irreversibel zerstört wird. Mit einer Elektronenstrahlintensität von $10^{-7}$ J/cm² wird eine etwa 50%ige Abnahme der Helligkeit erreicht; eine völlige Zurstörung der Lumineszenz erfolgt bei einer Intensität von $10^{-6}$ J/cm².

Auf diese Weise erhält man eine flächenförmige Anordnung von einander berührenden Bereichen, wo der Leuchtstoff zerstört ist bzw. in seinen ursprünglich lumineszierenden Eigenschaften belassen worden ist. Die Schicht erhält also die Information, an welchen Stellen der Elektronenstrahl eine hohe bzw. eine niedrige Intensität gehabt hat. Das spätere Auslesen der auf diese Weise abgespeicherten Information geschieht dementsprechend folgendermaßen:

Die durch den Einschreibvorgang modifizierte Leuchtstoffschicht wird wie beim Einbrennen der Information zeilenförmig abgerastert. Im Gegensatz zum Einschreibvorgang wird jedoch dieses Mal die Intensität des Elektronenstrahls nicht moduliert. Es wird eine niedrige, zeitlich konstante Intensität gewählt, so daß der Leuchtstoff zwar zur Lumineszenz angeregt wird, aber gewährleistet ist, daß keine weitere

4

Zerstörung mehr auftritt. Dies ist z.B. bei einer Intensität von $10^{-8}$ J/cm² der Fall. Beim Abrastern der Schicht wird folglich Lumineszenzlicht an den Stellen der Schicht ausgesendet, wo eine vorherige Zerstörung nicht stattgefunden hat. Das Lumineszenzlicht wird während des Abrasterns zeitlich mit einem Photomultiplier (RCA Typ C31034A) registriert. Deise Art der Lichtdetektion ist bekanntermaßen äußerst sensitiv und kann mit hoher Geschwindigkeit erfolgen, so daß die Geschwindigkeit des abrasternden Elektronenstrahls im wesentlichen durch die Abklingzeit der Lumineszenz bestimmt wird.

Einen weiteren Vorteil stellt die Verwendung der transparenten Unterelektrode dar. Sie ermöglicht die Detektion des Lumineszenzlichtes sowohl von der Substratunterseite als auch von der Schichtseite her. Es ist auch möglich, auf die transparente Unterelektrode zu verzichten und statt dessen die Ableitelektrode in Form eines reflektierenden Aluminium-Films — wie man ihn üblicherweise bei Kathodenstrahlröhren verwendet — an der Schichtoberseite anzubringen. In diesem Fall erfolgt die Detektion des Lumineszenzlichtes nur von der Schichtunterseite her.

Da die Geschwindigkeit des abrasternden Elektronenstrahls zeitlich konstant ist, läßt sich auf diese Art und Weise reproduzieren, an welchen Stellen die Leuchtstoffschicht zuvor zerstört wurde.

Mit dem beispielsweise verwendeten Rasterelektronenmikroskop konnten auf diese Art und Weise Einbrennflecken der Größe 10 (µ)² erreicht werden. Dementsprechend kann man auf einer abgerasterten Fläche von 1 × 1 mm² etwa 300 × 300 Punkte mit der Information lumineszierend — nicht lumineszierend codieren. Die Speicherdichte hängt einerseits von dem Durchmesser des einbrennenden/auslesenden Elektronenstrahls ab, andererseits von der Homogenität und Dicke der Leuchtstoffschicht sowie von der Eindringtiefe des Elektronenstrahls, die von der Beschleunigungsspannung abhängt.

Mit modernen Rasterelektronenmikroskopen erreicht man ohne Mühe Elektronenspotdurchmesser von 5 nm. In diesem Falle wird die Speicherdichte durch den Elektronenstrahldurchmesser auf 4 × 10¹² Pixels/cm² begrenzt.

### Beispiel 2

Eine Leuchtstoffschicht wird, wie in Beispiel 1 beschrieben, hergestellt und die Information ebenfalls wie in Beispiel 1 eingelesen.

Das Auslesen der Information erfolgt parallel, durch ganzflächige Bestrahlung der Leuchtstoffschicht mit einer UV-Lampe und Abbildung des Lumineszenz-Bit-Musters auf ein Detektorarray.

### Beispiel 3

Eine 2 mm dicke Europiumcinnamat enthaltende Polymethacrylatplatte, wie in Ausführungsbeispiel 51 der DE—OS—30 32 611 beschrieben, wird mit einem fokussierten $CO_2$-Laser abgerastert und die Information seriell durch Modulation der Laserintensität eingeschrieben. Das Auslesen erfolgt wie in Beispiel 2 beschrieben.

### Beispiel 4

In eine lumineszierende Polymethacrylatplatte wird wie in Beispiel 3 eine Information eingeschrieben. Das Auslesen der Platte erfolgt seriell durch Abrastern der Platte mit einem UV-Laser bei gleichzeitiger Detektion des Lumineszenzlichtes.

## Patentansprüche

1. Verwendung einer auf eine Unterlage aufgebrachten, für Elektronenstrahlung empfindlichen Schicht (4), die einen organischen Seltenerdmetall-Leuchtstoff aufweist oder aus einem solonen Leuchtstoff besteht, zum Einschreiben von Informationen mit Elektronenstrahlen, deren Intensität während der Bestrahlung der Schicht derart bemessen wird, daß der Leuchtoff während der Bestrahlungsdauer in seinen Lumineszenzeigenschaften örtlich irreversibel zerstört wird.

2. Verwendung nach Anspruch 1, wobei die örtliche Zerstörung der Lumineszenzeigenschaften in Abstufungen erfolgt.

3. Verwendung nach Anspruch 1 oder 2, wobei die Dicke der Schicht (4) kleiner oder gleich der Elektroneneindringtiefe ist.

4. Verwendung nach Anspruch 1, 2 oder 3, wobei der organische Seltenerdmetall-Leuchtstoff in der Schicht (4) ein Seltenerdmetallsalz einer Carbonsäure ist.

5. Verwendung nach Anspruch 1 oder 4, wobei der organische Seltenerdmetall-Leuchstoff in der Schicht (4) die Seltenerdmetalle Europium, Terbium, Cer oder Thulium enthält.

## Revendications

1. Application d'une couche appliquée sur un substrat et sensible au rayonnement électronique (4), laquelle couche présente une substance luminescente organique de métal des terres rares ou est constituée par une telle substance luminescente pour l'inscription d'informations avec des faisceaux électroniques dont l'intensité, pendant l'irradiation de la couche, est mesurée, de façon que lors de la durée d'irradiation, la propriété de luminescence de la substance luminescente soit localement détruite de façon irréversible.

2. Application selon la revendication 1, dans laquelle la description locale des propriétés de luminescence s'effectue par échelons.

3. Application selon la revendication 1 ou 2, dans laquelle l'épaisseur de la couche 4 est inférieure ou égale à la profondeur de pénétration des électrons.

4. Application selon la revendication 1, 2 ou 3, dans laquelle la substance luminescence organique de métal des terres rares dans la couche (4) est un sel de métal des terres rares d'un acide carboxylique.

5. Application selon la revendication 1 ou 4, dans laquelle la substance luminescente organique de métal des terres rares dans la couche (4) contient les métaux des terres rares europium, terbium, cérium ou thulium.

**Claims**

1. The use of an electron-beam sensitive coating (4) which is applied to a substrate, said coating containing an organic rare earth metal phosphor or consisting of such a phosphor, for the purpose of writing information by means of electron beams whose intensity during the irradiation of the coating is calculated so that the luminescent properties of the phosphor are irreversibly destroyed locally during the exposure time.

2. The use as claimed in Claim 1, the local destruction of the luminescent properties taking place in steps.

3. The use as claimed in Claim 1 or 2, the thickness of the coating (4) being smaller or equal to the depth of penetration of the electrons.

4. The use as claimed in Claim 1, 2 or 3, the organic rare earth metal phosphor in the coating (4) being a rare earth metal salt of a carboxylic acid.

5. The use as claimed in Claim 1 or 4, the organic rare earth metal phosphor in the coating (4) containing the rare earth metals Europium, terbium, cerium or thulium.